# EUROPEAN PATENT APPLICATION

(11) **EP 0 808 016 A1**
(43) Date of publication of application: **19.11.1997**
(21) Application number: 97303081.0
(22) Date of filing: 06.05.1997
(51) Int. Cl.: H02M 7/5395

(54) **PWM inverter apparatus**

(30) Priority: 14.05.1996 JP 143543/96
(71) Applicant: HITACHI, LTD., Chiyoda-ku, Tokyo 101 (JP)
(72) Inventor: Yasuda, Kouji, Hitachinaka-shi, Ibaraki 312 (JP); Toyota, Eiichi, Hitachinaka-shi, Ibaraki 312 (JP); Suzuki, Masato, Naka-gun, Ibaraki 319-21 (JP); Nakata, Kiyoshi, Nishiibaraki-gun, Ibaraki 309-12 (JP); Inarida, Satoru, Hitachinaka-shi, Ibaraki 312 (JP); Terunuma, Mutsuhiro, Mito-shi, Ibaraki 310 (JP)
(74) Representative: Calderbank, Thomas Roger

(57) **Abstract**

An PWM inverter of the present invention, for converting a direct current voltage to an alternating current voltage, generating voltage pulses, the width of said voltage pulses being modulated, corresponding to at least one of an output voltage demand and a fundamental wave frequency demand of said output voltage, comprises a period changing means for changing a voltage pulse output period, corresponding to the at least one of the output voltage demand and the fundamental frequency demand, and a modulation mode generating means for generating at least a mode of an asynchronous over-modulation mode generating a pulse of a wider width, generated in the vicinity of each peak of said output voltage fundamental wave, than widths of pulses generated in the vicinity of each zero-crossing of said fundamental wave as a PWM mode for controlling output voltages, wherein the period changing means gradually decreases the voltage pulse output period in order to increases the number of the narrow width pulses in the vicinity of each zero-crossing of the fundamental wave in the asynchronous over-modulation mode.

## Description

The present invention relates to a PWM inverter apparatus for converting direct current to alternating current.

As prior-art, a PWM inverter for controlling an output voltage by combining an asynchronous modulation mode and asynchronous over-modulation mode is disclosed in " power conversion apparatus " described by JP-A-227085/1995. This apparatus has the switching characteristics in which the output period of each voltage pulse is the same and constant in the asynchronous modulation mode and the asynchronous over-modulation mode.

In the existing technique, no problems occur if the output period of voltage pulses is much shorter than the fundamental period the fundamental wave in high frequency switching operations. However, a low frequency pulsation is generated in an output current of the inverter, especially in the asynchronous over-modulation mode, if the switching frequency is suppressed at a low frequency for reducing switching losses of switching elements.

The cause of the low frequency pulsation is as follows. In the asynchronous over-modulation mode, narrow width voltage pulses generated in the vicinity of each zero-crossing of the fundamental wave adversely affect on the -accuracy of the inverter current control. In the case that the output period of the voltage pulses is not synchronous with the period of the fundamental wave ( so-called the asynchronous PWM method ), in each period of the fundamental wave for the voltage to be output, dispersion occurs in output timings or the number of the above-mentioned narrow width pulses. Although in high frequency switching operations, low frequency pulsations are generated in the output current of the inverter, since the pulsations are at a very low level, their influences are negligible. However, in the case of the low switching operations, since the number of the narrowwidth pulses is few, and the above-mentioned dispersion causes large influences on the output current of the inverter, the pulsations of the current become prominent.

An objective of the present invention is to control an inverter using a PWM inverter apparatus so as not to generate low frequency pulsations in the current of the inverter, and so as to realize a control of the stable current generation in the inverter.

According to the invention there is provided a means for setting the output periods of voltage pulses, corresponding to an output voltage demand, in which the output period of the voltage pulses in the asynchronous over-modulation operations is gradually decreased in proportion to an increase of the output voltage demand.

In the present invention, since the number of narrow width voltage pulses in the vicinity of each zero-crossing of the output voltage fundamental wave increases by decreasing the pulse output period of the asynchronous over-modulation mode, the number of narrow width voltage pulses for every period of the fundamental wave also increases, and the influences of the dispersions in the output timings and the number of the narrow width voltage pulses also become small, whereby the low frequency pulsations of the current can be prevented from occurring in the asynchronous over-modulation mode.

In the drawings

Fig. 1 shows a composition of an embodiment according to the present invention.

Fig. 2 shows waveforms of a modulation wave, a carrier wave and a voltage pulse pattern in an asynchronous modulation mode.

Fig. 3 shows waveforms of a modulation wave, a carrier wave and a voltage pulse pattern in an asynchronous over-modulation mode.

Fig. 4 is a graph of current waveforms showing an example of a problem of the pulsation of an inverter current in an existing related method.

Fig. 5 is a figure showing a relation output voltage demand and a voltage output period.

Fig. 6 shows waveforms of a modulation wave, a carrier wave and a voltage pulse pattern in the embodiment in which the PWM mode is switched from the asynchronous modulation mode to asynchronous over-modulation mode.

Fig. 7 is a graph of current waveforms without the pulsation realized by applying the present invention.

Hereinafter, details of embodiments of the present invention will be explained with reference to the drawings.

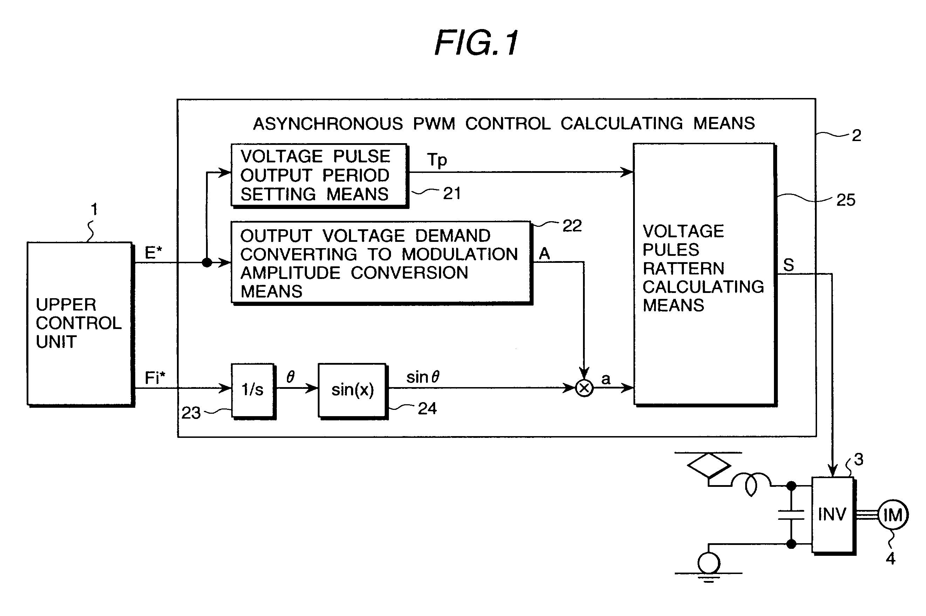

Fig. 1 shows a first embodiment of the present invention, in which a PWM inverter controls an output voltage, for a two level inverter, by combining the asynchronous modulation mode operation and the asynchronous over-modulation mode operation. In Fig. 1, numeral 1 indicates an upper control unit outputting the output voltage demand E* and the fundamental frequency F* of the output voltage, numeral 2 indicates an asynchronous PWM control calculating means, numeral 3 indicates a main circuit of the two-level inverter, and numeral 4 indicates a load of the inverter ( induction motor ).

The asynchronous PWM control calculating means 2 is composed of a voltage pulse output period setting means 21, an output voltage demand converting to modulation wave amplitude conversion means 22, an integrator 23, a calculating means 24 of function y = sin ( x ), and a voltage pulse pattern calculating means 25.

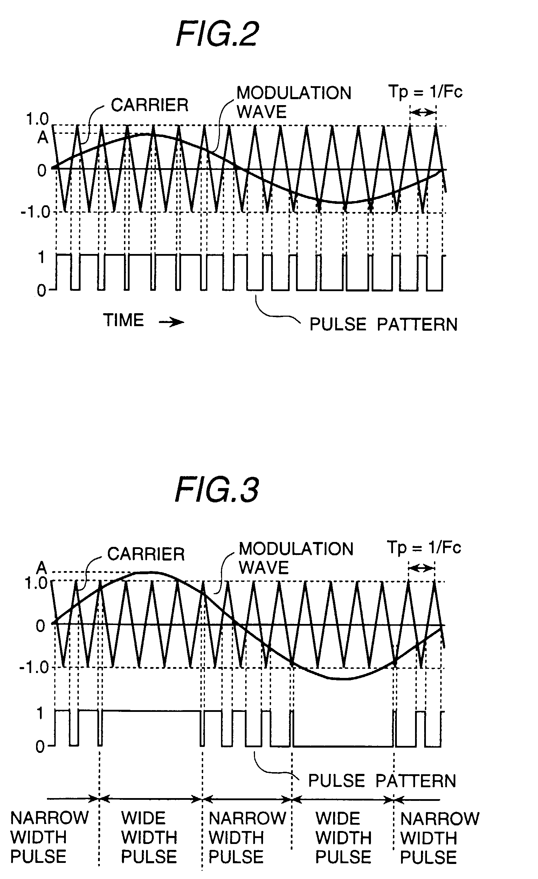

In the following, as an example of a method of obtaining the voltage pulse pattern, a triangular wave comparison PWM method is explained. The output period Tp of the output voltage pulse is an inverse of the frequency Fc of a carrier wave. Waveforms in the pulse pattern, the modulation wave and the carrier wave in the asynchronous modulation mode and the asynchronous over-modulation mode are shown in Fig. 2 and Fig. 3, respectively. In Fig. 2 and Fig. 3, "A" indicates an amplitude of the modulation wave, Tp indicates the output period of voltage pulses and Fc indicates a frequency of the carrier wave. In the asynchronous modulation operation shown in Fig, 2, the voltage pulses are generated at a constant pulse output timing. Further, in the asynchronous over-modulation operation shown in Fig, 3, the broad pulse extending to both sides of the center, namely, the peak in the output voltage fundamental wave for one period is generated. Furthermore, in the waveforms of the voltage pulse pattern in the asynchronous over-modulation mode operation, for the sake of convenience, the broad pulse extending to both sides of the peak in the output voltage fundamental wave is referred to a wide pulse and the narrow pulse in the vicinity of the zero-crossing of the output voltage fundamental wave is referred to a narrow pulse.

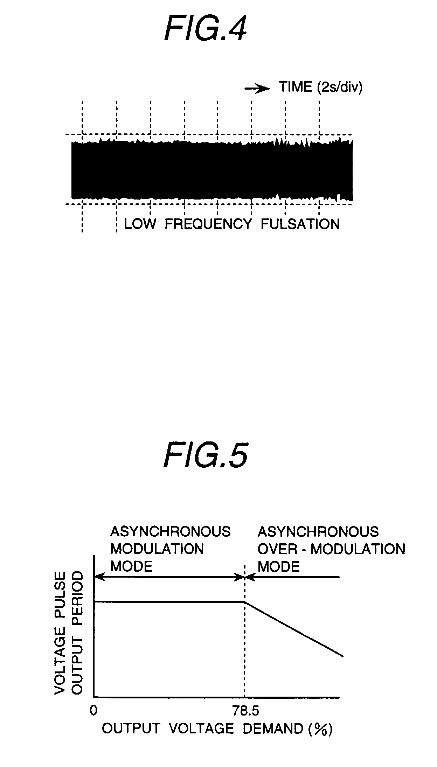

Actually, the frequency Fc of the carrier wave is often determined by taking the losses of switching elements of the main circuit of the inverter. Therefore, the frequency Fc of the carrier wave is sometimes suppressed to a low frequency. In the switching of a low frequency, the number of the narrow pulses shown in Fig. 3 in the asynchronous over-modulation mode operations is a few. Consequently, influences of the dispersion of the pulse output timings or the number of the pulses at every period of the output voltage fundamental wave, which are caused by an asynchronous modulation mode operation, become prominent, and the low frequency pulsations as shown in Fig. 4 are generated in the current of the inverter.

The above-mentioned dispersion is caused by setting the frequency of the carrier wave in the asynchronous modulation mode, to the same low frequency value of the output voltage modulation wave in the asynchronous over-modulation mode.

Since in the asynchronous over-modulation mode operation, at the range in which the absolute values of the amplitudes in the modulation wave exceed the absolute values of the amplitudes of the carrier wave, that is, during each broad pulse, switching operations are stopped, the switching losses of elements in the main circuit of the inverter can be reduced. Now, taking notice of the feature that the frequency of the carrier wave can be increased to a quantity commensurate to the stopping of the switching operations during each broad pulse, as shown in Fig. 1, the voltage pulse output period setting means 21 is provided in the asynchronous PWM control calculating means 2. The voltage pulse output period setting means 21 refers to the output voltage demand E*, and continuously decreases the output period Tp of voltage pulses in proportion to a decrease of the output voltage E* ( increases the frequency Fc of the carrier wave ).

In Fig. 5, a relation between the output voltage demand E* and the output period of voltage pulses Tp is shown. In the asynchronous over-modulation mode, when the output voltage demand E* increases, the output period Tp of voltage pulses is linearly decreased, in proportion to the increase of the output voltage demand E*, which linearly increases the frequency Fc of the carrier wave.

Although, in Fig. 5, the output period Tp of voltage pulses linearly changes in accordance with changes of the output voltage demand E* described by % ( the rated power is 100 % ), it is available to change the output period Tp of voltage pulses, based on a predetermined function taking the losses of elements in the main circuit, timbre changes of noises generated by magnetic force, due to changes of the switching frequency in the over-modulation mode, into account. Moreover, although the output period Tp of voltage pulses in the asynchronous modulation mode is set as constant, it is also possible to change the period Tp in accordance to the output voltage demand E*.

In the following, operations of the embodiment are explained.

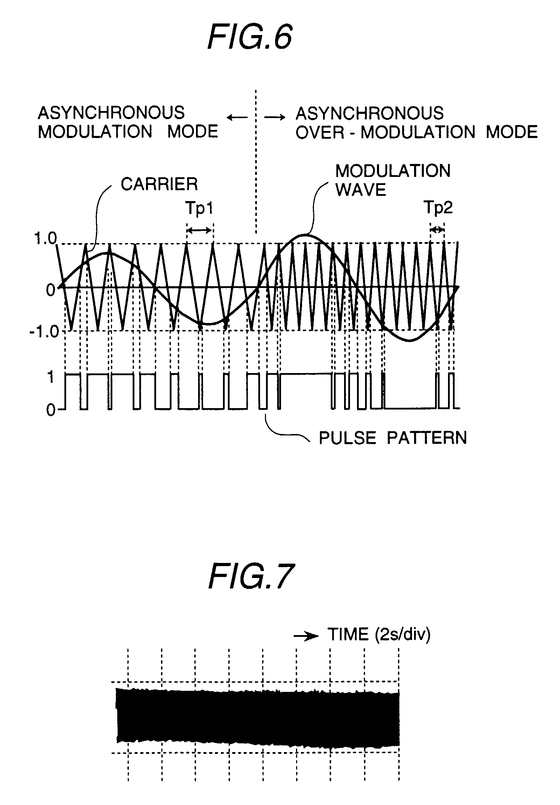

When the asynchronous PWM control calculating means 2 receives the output voltage demand E* and the fundamental frequency demand F*, the converting output voltage demand to modulation wave amplitude means 22 outputs amplitude "A" of the modulation wave, based on the output voltage demand E*. Further, the converting output voltage demand to modulation wave amplitude means 22 obtains a fundamental phase θ by integrating the fundamental wave frequency demand F*, and calculates a sine value of the fundamental wave phase, sin θ, by using the calculating means of a function y = sin ( X ) 24. An instantaneous amplitude "a" is obtained by multiplying the sine value of sin θ by the amplitude "A" of the modulation wave, and is input to the voltage pulse pattern calculating means 25. Further, the output period Tp of voltage pulses obtained, based on the relation shown in Fig. 5, is input to the voltage pulse pattern calculating means 25 from the voltage pulse output period setting means 21 which has received the output voltage demand E*. The voltage pulse pattern calculating means 25 outputs a voltage pulse corresponding to the instantaneous amplitude "a" of the modulation wave at every output period Tp. In the embodiment, as shown in Fig. 6, since the output period of voltage pulses is decreased when the PWM mode is switched from the asynchronous modulation mode to the asynchronous over-modulation mode, the number of the narrow pulses in the vicinity of the zero-crossing increases, which also increases the number of voltage pulses for each voltage pulse output period of the output voltage fundamental wave. Therefore, in the embodiment, the control accuracy in the asynchronous over-modulation mode operations is improved, and the low frequency pulsations generated in the current of the inverter can be also suppressed.

Waveforms of the inverter current generated during the asynchronous over-modulation mode operations are shown in Fig. 7. From Fig. 7, it is proved that the low frequency pulsations generating in the current of the inverter are suppressed in the asynchronous over-modulation mode operations.

In the voltage pulse pattern calculation means 25, in the case that the triangular wave comparison method is applied, the comparison between an instantaneous amplitude of the output voltage fundamental wave and an instantaneous amplitude of the carrier wave is executed, but it is possible to calculate the voltage pulse pattern by using a microcomputer.

Although the present invention has been explained for an example of a two-level inverter, the present invention can be also applied to a three or more multi-level inverter.

As explained above, by applying the present invention, is becomes possible to increase the number of the narrow pulses in the vicinity of each zero-crossing of the output voltage fundamental wave, and to remove bad influences of the dispersion of the output timings and the number of the narrow width pulses, which the asynchronous PWM method has inherently as its particular property. Thus, it becomes possible to suppress the low frequency pulsations of the current of the inverter in the asynchronous over-modulation mode operations, and realize a stable control of the inverter.

## Claims

1. An PWM inverter apparatus for converting a direct current voltage to an alternating current voltage, by generating voltage pulses, a width of said voltage pulses being modulated, with at least one PWM mode of an asynchronous over-modulation mode generating a pulse of a wider width, generated in the vicinity of a peak of an output voltage fundamental wave, than widths of pulses generated in the vicinity of each zero-crossing of said fundamental wave, said PWM inverter apparatus comprising:
a voltage pulse period changing means for changing an output period of said voltage pulses, corresponding to a value of at least one of said output voltage demand and a fundamental wave frequency demand in said asynchronous over-modulation mode.

2. An PWM inverter apparatus according to claim 1, wherein said voltage pulse period changing means gradually increases said output period in proportion to a value increase of at least one of said output voltage demand and said fundamental wave frequency demand.

3. An PWM inverter apparatus according to claim 1 or claim 2, wherein
one or more levels are predetermined to at least one of said output voltage demand and said fundamental wave frequency demand, and when said at least one of said output voltage demand and said fundamental wave frequency demand exceeds each of said one or more levels in a direction predetermined for said one of said one or more level, said voltage pulse period changing means changes said output period to a value predetermined for each level.

4. An PWM inverter apparatus according to claim 1, further including an asynchronous modulation mode generating means for voltage pulses of a constant output period for one cycle of an output voltage fundamental, wherein said voltage pulse period changing means sets a more narrow output period of voltage pulses generated in said asynchronous over-modulation mode than an output period of voltage pulses generated in said asynchronous modulation mode.

5. An PWM inverter apparatus according to claim 4, wherein a level is predetermined to at least one of said output voltage demand and said fundamental wave frequency demand, and when a value of said at least one of said output voltage demand and said fundamental wave frequency demand exceeds said level in a direction predetermined for said level, said PWM mode is changed from one of said asynchronous modulation mode and said asynchronous over-modulation mode to another one of said asynchronous modulation mode and said asynchronous over-modulation mode.
